Europäisches Patentamt

European Patent Office

Office européen des brevets

(19)

(11) **EP 1 128 881 B1**

(12) **FASCICULE DE BREVET EUROPEEN**

(45) Date de publication et mention
de la délivrance du brevet:
**08.06.2005 Bulletin 2005/23**

(51) Int Cl.⁷: **B01D 15/02**

(86) Numéro de dépôt international:
**PCT/FR1999/002653**

(21) Numéro de dépôt: **99950884.9**

(22) Date de dépôt: **29.10.1999**

(87) Numéro de publication internationale:
**WO 2000/025885 (11.05.2000 Gazette 2000/19)**

(54) **PROCEDE DE SEPARATION AVEC DES ZONES CHROMATOGRAPHIQUES A LONGUEUR VARIABLE**

TRENNUNGSVERFAHREN MIT LÄNGENVERÄNDERLICHEN CHROMATOGRAPHISCHEN ZONEN

SEPARATION METHOD WITH CHROMATOGRAPHIC ZONES WITH VARIABLE LENGTH

(84) Etats contractants désignés:
**AT BE CH CY DE DK ES FI FR GB GR IE IT LI LU MC NL PT SE**

(30) Priorité: **29.10.1998 FR 9813600**

(43) Date de publication de la demande:
**05.09.2001 Bulletin 2001/36**

(73) Titulaires:
• **Institut Français du Pétrole**
  **92852 Rueil-Malmaison Cedex (FR)**
• **Novasep**
  **54502 Vandoeuvre-Les Nancy cedex (FR)**

(72) Inventeurs:
• **BAILLY, Michel**
  **F-54000 Nancy (FR)**

• **ADAM, Philippe**
  **F-54320 Maxeville (FR)**
• **LUDEMANN-HOMBOURGER, Olivier**
  **F-54000 Nancy (FR)**
• **NICOUD, Roger, Marc**
  **F-54630 Richardmesnil (FR)**

(56) Documents cités:
**FR-A- 2 721 528**      **FR-A- 2 754 730**
**US-A- 4 498 991**

Remarques:
Le dossier contient des informations techniques présentées postérieurement au dépôt de la demande et ne figurant pas dans le présent fascicule.

## Description

L'invention concerne un procédé et un dispositif de séparation d'au moins un composant d'un mélange par contact entre des phases liquides et solides dans des zones chromatographiques à longueur variable.

Elle s'applique aux séparations chirales et en particulier à la séparation de stéréoisomères utilisés notamment dans le domaine de la pharmacie.

Il existe différents procédés chromatographiques utilisables pour la production de composants chimiques à grande échelle.

La publication de R M. NICOUD et M. BAILLY (Choice and optimization of operating mode in industrial chromatography, Proceeding of the 9th International Symposium on preparative and industrial chromatography, PREP 92, April 1992, Nancy, p. 205-220) : illustre cet arrière plan technologique.

Ces procédés peuvent être classés suivant plusieurs critères : le procédé peut être soit discontinu, soit continu, la composition de l'éluant peut être isocratique ou un gradient de composition peut être effectué.

Une de ces possibilités est le procédé classique à contre-courant à 4 zones en lit mobile vrai où dans un système à lit mobile en vue d'un effet à contre-courant continu, des solides circulent en continu dans une boucle fermée devant des points fixes d'introduction de charge et d'éluant en alternance avec des points de soutirage d'un raffinat et d'un extrait.

Ce procédé étant parfaitement connu et décrit, seules les caractéristiques requises pour comprendre la nature de cette invention sont résumées ci-après. Pour le mode de fonctionnement en Lit Mobile Vrai, un contact à contre-courant entre les phases liquides et solides est réalisé dans la colonne qui peut être divisée en 4 zones différentes.

Zone I :    Tout ce qui se situe entre les lignes d'injection d'éluant et de soutirage d'extrait

Zone II :    Tout ce qui se situe entre les lignes de soutirage d'extrait et d'injection de charge

Zone III :    Tout ce qui se situe entre les lignes d'injection de charge et de soutirage de raffinat

Zone IV :    Tout ce qui se situe entre les lignes de soutirage de raffinat et d'injection d'éluant.

Du fait des débits d'entrées/sorties, le débit de liquide varie suivant la zone : $Q_I$, $Q_{II}$, $Q_{III}$, $Q_{IV}$ étant les débits respectifs dans les zones I, II, III et IV.

En 1961, la Compagnie UOP a breveté un procédé permettant de simuler le mouvement du solide par une connexion astucieuse entre les colonnes interconnectées dans une boucle fermée, (US Patent 2 985 589 et US 3 291 726, 3 268 605). Ce procédé, appelé Lit Mobile Simulé (LMS), permet alors de réaliser pratiquement le Lit Mobile Vrai de façon simple. Il est caractérisé en ce que l'on fait avancer périodiquement vers l'aval (dans le sens de circulation du fluide principal) les points d'introduction de charge et d'éluant alors que l'on fait avancer simultanément d'une colonne ou tronçon de colonne les points de soutirage d'un raffinat et d'un extrait.

Toutes les lignes d'entrée et de sortie sont donc déplacées simultanément à chaque période $\Delta T$ et le temps du cycle, temps au bout duquel elles retrouvent leur position initiale est égal à Nc x $\Delta T$, Nc étant le nombre total de colonnes.

L'art antérieur est aussi illustré par la demande de brevet de la Demanderesse FR-A-2 754 730 et par le brevet US 4 498 991.

Ce procédé a été largement décrit, notamment par CHARTON et NICOUD (complete design of a simulated moving bed, Journal of Chromatography 1995, 702, 97-102).

On rappellera ci-après uniquement le minimum d'information nécessaire à une bonne compréhension de la présente invention.

Les positions d'entrées/sorties sont déplacées simultanément à intervalles fixes. Il est conseillé de repérer la position de la ligne par *ligne (n),* ce qui veut dire qu'à un moment donné, une *Ligne* d'entrée/sortie donnée est connectée à l'entrée de la colonne n. Par exemple dans un système à 12 colonnes, *Charge (9)* signifie que la ligne de charge est connectée à l'entrée de la colonne 9 alors que *Raffinat (11)* signifie que la ligne de raffinat est connectée à l'entrée de la colonne 11.

En utilisant cette définition, un système peut être représenté par : *El(3)/Ext(6)/Charge(9)/Raff(11)*. Pour cette configuration, le nombre de colonnes en zone I, II, III et IV sont respectivement : 3/3/2/4. La configuration du système est alors complètement définie par :

| | entrée/sortie | Nb de colonnes |
|---|---|---|
| *Au temps 0* | *El(3)/Ext(6)/Charge(9)/Raff (11)* | *3/3/2/4* |

Après un temps donné (la PERIODE) toutes les positions d'entrées/sorties sont déplacées simultanément d'une colonne et le système est décrit ainsi :

*Au temps ΔT:        El(4)/Ext(7)/Charge(10)/Raff(12)        3/3/2/4*

Après une nouvelle période, toutes les positions seront à nouveau déplacées simultanément d'une colonne et le système sera alors décrit ainsi :

*Au temps 2 x ΔT:El(5)/Ext(8)/Charge(11)/Raff(1) 3/3/2/4*

Au temps 2 x ΔT, la position du raffinat a été déplacée de la position 12 à la position 1. Remarquons que la *position I* peut être écrite *position 13 modulo 12*. ($[13]_{12}$).

Cette présentation peut être généralisée aux Lits Mobiles Simulés comportant un nombre Nc de colonnes. Pour un Lit Mobile Simulé composé de Nc colonnes, il est évident qu'aucune position ne peut excéder Nc. Dans un but de simplicité, nous augmenterons simplement toutes les positions d'une unité à chaque déplacement, et définirons toutes les positions *modulo Nc* (par exemple $[8]_{Nc}$=3 si *Nc*=5).

Si à un moment donné la configuration du Lit Mobile Simulé est *El(e)/Ext(x)/Charge(f)/Raff(r),* un simple raisonnement permet de trouver le nombre de colonnes contenues dans chaque zone :

zone 1: $Nb1=[x-e]_{Nc}$ ;        zone 2: $Nb2=[f-x]_{Nc}$

zone 3: $Nb3=[r-f]_{Nc}$ ;        zone 4: $Nb4=[e-r]_{Nc}$

On peut vérifier simplement que : *Nb1+Nb2+Nb3+Nb4=Nc.*
et le système est complètement défini par le tableau 1

Table 1

| | entrée/sortie | Nb de colonnes dans chaque zone |
|---|---|---|
| *Au temps 0* | *El(e)/Ext(x)/Feed(f)/Raff(r)* | *Nb1/Nb2/Nb3/Nb4* |
| *Au temps ΔT* | *El([e+1]Nc)/Ext([x+1]Nc)/Feed([f+1]Nc)/Raff([r+1]Nc)* | *Nb1/Nb2/Nb3/Nb4* |
| *Au temps n x ΔT* | *El([e+n]Nc)/Ext([x+n]Nc)/Feed([f+n]Nc)/Raff([r+n]Nc)* | *Nb1/Nb2/Nb3/Nb4* |

Les points d'injection et de soutirage sont décalés d'une colonne après une période ΔT et de Nc colonnes après Nc périodes. Le nombre de colonnes dans chaque zone reste inchangé. Les points d'injection et de soutirage retrouvent donc leur position initiale après le temps de cycle Nc x ΔT.

Les principales caractéristiques des systèmes de Lit Mobile Simulé (donnant une réalisation pratique du Lit Mobile Vrai) sont définies par :

1. des zones définies par la position des lignes entrées/sorties.

2. un nombre fixé de colonnes par zone, constant au cours du temps.

3. des zones de longueur fixée et constante au cours du temps

4. un déplacement synchronisé de toutes les lignes entrées/sortie.

Les caractéristiques 2, 3 et 4 sont dues au fait que le Lit Mobile Simulé simule le comportement du Lit Mobile vrai.

Il est possible d'après le brevet FR. 2 721 528 de corriger les perturbations de composition de l'extrait et du raffinat causées par le volume mort de la pompe de recyclage située entre le dernier et le premier lit de la colonne d'adsorption, en augmentant d'une valeur appropriée la durée de connexion d'un courant d'injection ou de soutirage de fluides au système chaque fois que ce courant passe d'une position immédiatement antérieure à une position immédiatement postérieure au volume mort, puis en diminuant la dite durée de connexion lorsque ce courant passe de la position immédiatement postérieure au volume mort à la position suivante. Mais une fois par cycle, toutes les entrées et sorties sont décalées simultanément. Cette technique permet simplement de compenser les imperfections technologiques pour la faire fonctionner de façon aussi proche d'un lit mobile simulé idéal.

Dans les procédés de séparation en lit mobile simulé utilisant un faible nombre de colonnes, il apparaît le plus souvent que les produits récupérés dans l'extrait et dans le raffinat présentent des puretés différentes, excellente pour l'un des deux mais insuffisante pour l'autre. Dans certains types de séparation, quand le volume d'adsorbant mis en jeu est faible, le niveau de pureté de l'extrait et du raffinat peut même s'avérer insuffisant, comme on le verra dans les exemples.

Un des objets de l'invention est de remédier à ces inconvénients.

Un autre objet est donc d'augmenter la pureté du produit soutiré en tant qu'extrait et en tant que raffinat.

Un autre objet est de minimiser les coûts de la séparation.

On a ainsi constaté qu'en ne déplaçant pas simultanément la position des entrées et des sorties de fluide durant la période et durant le temps de cycle, on pouvait obtenir des résultats améliorés.

De manière plus précise, l'invention concerne un procédé de séparation, appelé VARICOL, d'au moins un composant d'un mélange le contenant, dans un dispositif présentant un ensemble Nc de colonnes chromatographiques ou tronçons de colonnes chromatographiques contenant un adsorbant, montés en série et en boucle, la boucle comportant au moins un point d'une injection de charge, un point d'un soutirage de raffinat, un point d'une injection d'un éluant et un point d'un soutirage d'extrait, dans lequel on détermine entre un point d'injection et un point de soutirage ou vice-versa une zone chromatographique, le procédé étant caractérisé en ce que au bout d'une période ΔT de temps donné, l'ensemble des points d'injection et de soutirage se trouvent décalés d'un même nombre de colonnes ou tronçons de colonne, avantageusement d'une colonne ou tronçon de colonne, dans une direction donnée définie par rapport à celle de l'écoulement d'un fluide principal circulant à travers la boucle et en ce que, au cours de ladite période pendant toute la durée d'un cycle (Nc ΔT), on effectue le décalage des différents points d'injection et de soutirage à des temps différents de manière que la longueur des zones définies par lesdits différents points soit variable.

On définit la période comme le plus petit intervalle de temps ΔT au bout duquel chacune des entrées et sorties a été décalée du même nombre de colonnes ou tronçons de colonne, avantageusement d'une colonne ou tronçon de colonne, le décalage n'ayant pas lieu simultanément pour toutes les entrées et sorties.

Il est à noter qu'au bout d'un temps de cycle, le système a retrouvé sa position initiale. Lorsque le décalage est d'une colonne ou d'un tronçon de colonne par période, le temps de cycle est égal Nc x ΔT.

Le terme adsorbant est utilisé dans son sens le plus général. Il peut être un adsorbant comme un tamis moléculaire, zéolithique par exemple, utilisé dans les procédés d'adsorption, ou un adsorbant comme une résine échangeuse d'ions. Il peut aussi être une phase stationnaire sur base de silice, un adsorbant phase inverse et une phase chirale.

De manière plus détaillée, on peut réaliser au moins une fois la succession d'étapes suivantes :

- on décale à l'instant t1 au cours de ladite période, dans une direction donnée, la position du point d'injection ou de soutirage relatif à au moins une zone, d'une colonne ou tronçon de colonne, puis on décale à un instant t2 au cours de ladite période, dans la même direction la position du point d'injection ou de soutirage relatif à au moins une autre zone, d'une colonne ou tronçon de colonne, et on répète l'opération si nécessaire de manière à ce que, après ladite période de temps, on retrouve la même configuration de colonnes ou tronçons de colonne que la configuration initiale avec un décalage de toutes les positions des points d'injection et des points de soutirage d'un même nombre de colonnes ou tronçons de colonne et avantageusement d'une colonne ou tronçon de colonne.

Selon un autre mode de réalisation, on peut réaliser au moins une fois la succession d'étapes suivantes :

- on décale à l'instant t1 au cours de ladite période ΔT, dans une direction donnée, la position du point d'injection ou de soutirage relatif à au moins une zone, d'une colonne ou tronçon de colonne de façon à augmenter la longueur de ladite zone et à diminuer la longueur de la zone adjacente à ladite zone, puis on décale à un instant t2 au cours de ladite période, dans la même direction la position du point d'injection ou de soutirage relatif à au moins une autre zone, d'une colonne ou tronçon de colonne de façon à augmenter la longueur de ladite autre zone et à diminuer la longueur de la zone adjacente à ladite autre zone, et on répète l'opération si nécessaire de manière que, après ladite période de temps ΔT, on retrouve la même configuration de colonnes que la configuration initiale avec un décalage de toutes les positions des points d'injection et des points de soutirage d'un même nombre de colonnes ou tronçons de colonne et avantageusement d'une colonne ou tronçon de colonne.

Selon un premier mode de mise en oeuvre illustré par le tableau 2, on peut faire osciller continuellement les longueurs de zones d'une colonne, l'augmentation d'une zone étant compensée par la diminution de la suivante.

Table 2

| | entrée/sortie | Nb de colonnes dans chaque zone |
|---|---|---|
| Au temps 0 | El(e)/Ext(x)/Feed(f)/Raff(r) | Nb1/Nb2/Nb3/Nb4 |
| Au temps dT1 | El($[e+1]_{NC}$)/Ext(x)/Feed(f)/Raff(r) | Nb1-1/Nb2/Nb3/Nb4+1 |
| Au temps dT2 | El($[e+1]_{NC}$)/Ext(x)/Feed(f)/Raff($[r+1]_{NC}$) | Nb1-1/Nb2/Nb3+1/Nb4 |
| Au temps dT3 | El($[e+1]_{NC}$)/Ext(x)/Feed($[f+1]_{NC}$)/Raff($[r+1]_{NC}$) | Nb1-1/Nb2+1/Nb3/Nb4 |
| Au temps ΔT | El($[e+1]_{NC}$)/Ext($[x+1]_{NC}$)/Feed($[f+1]_{NC}$)/Raff($[r+1]_{NC}$) | Nb1/Nb2/Nb3/Nb4 |
| Au temps ΔT+ dT1 | El($[e+2]_{NC}$)/Ext($[x+1]_{NC}$)/Feed($[f+1]_{NC}$)/Raff($[r+1]_{NC}$) | Nb1-1/Nb2/Nb3/Nb4+1 |
| Au temps ΔT+ dT2 | El($[e+2]_{NC}$)/Ext($[x+1]_{NC}$)/Feed($[f+1]_{NC}$)/Raff($[r+2]_{NC}$) | Nb1-1/Nb2/Nb3+1/Nb4 |
| Au temps ΔT+ dT3 | El($[e+2]_{NC}$)/Ext($[x+1]_{NC}$)/Feed($[f+2]_{NC}$)/Raf($[r+2]_{NC}$) | Nb1-1/Nb2+1/Nb3/Nb4 |

Table 2 (suite)

| entrée/sortie | | Nb de colonnes dans chaque zone |
|---|---|---|
| *Au temps 2 x ΔT* | *El([e+2]$_{NC}$)/Ext([x+2]$_{NC}$)/Feed([f+2]$_{NC}$)/Raff([r+2]$_{NC}$)* | *Nb1/Nb2/Nb3/Nb4* |

Selon un second mode de mise en oeuvre illustré par le tableau 3, l'augmentation de longueur d'une zone peut être compensée par la diminution de la zone opposée.

Table 3

| entrée/sortie | | Nb de colonnes dans chaque zone |
|---|---|---|
| *Au temps 0* | *El(e)/Ext(x)/Feed(f)/Raff(r)* | *Nb1/Nb2/Nb3/Nb4* |
| *Au temps dT1* | *El([e+1]$_{NC}$)/Ext(x)/Feed(f)/Raff([r+1]$_{NC}$)* | *Nb1-1/Nb2/Nb3+1/Nb4* |
| *Au temps ΔT* | *El([e+1]$_{NC}$)/Ext([x+1]$_{NC}$/Feed([f+1]$_{NC}$)/Raff([r+1]$_{NC}$)* | *Nb1/Nb2/Nb3/Nb4* |
| *Au temps ΔT+ dT1* | *El([e+2]$_{NC}$)/Ext([x+1/Feed(f+1)/Raff([r+2]$_{NC}$)* | *Nb1-1/Nb2/Nb3+1/Nb4* |
| *Au temps 2 x ΔT* | *El([e+2]$_{NC}$)Ext([x+2]$_{NC}$)/Raff([r+2]$_{NC}$* | *Nb1/Nb2/Nb3/Nb4* |

Plusieurs autres modes de réalisation sont possibles, quelques uns d'entre eux étant représentés dans les exemples.

On peut, selon un mode de réalisation avantageux, décaler à l'instant t1 d'une colonne ou tronçon de colonne la position du point de soutirage de l'extrait et la position du point de soutirage du raffinat puis on peut décaler à l'instant t2 d'une colonne ou tronçon de colonne au cours de ladite période la position du point d'injection de la charge et la position d'injection de l'éluant.

Selon une caractéristique du procédé, on peut effectuer au cours de la période tous les décalages des positions d'injection ou de soutirage avec un déphasage de temps sensiblement constant et avantageusement à un déphasage de temps au moins égal à un quart de période.

Selon une variante, on peut effectuer, au cours de la période, les décalages des positions des points d'injection ou de soutirage avec un déphasage de temps non constant.

Selon une autre caractéristique, le débit de fluide circulant dans une zone donnée est généralement maintenu sensiblement constant.

Il est avantageux d'effectuer les décalages des positions des points d'injection et de soutirage dans la même direction que celle de l'écoulement dans les colonnes ou tronçon de colonnes.

Selon une autre caractéristique avantageuse du procédé, au moins un débit de fluide circulant dans une ligne d'injection ou de soutirage peut être contrôlé par la pression dans le dispositif. De préférence, c'est celui du raffinat et/ou de l'extrait, les autres fluides étant alors sous contrôle de débit.

On peut avantageusement utiliser en tant qu'éluant un liquide, mais on peut opérer aussi avec un fluide supercritique ou avec un fluide subcritique.

Le domaine de pressions dans lequel on réalise des séparations de produits peut se situer entre 0,1 et 50 MPa et de préférence entre 0,5 et 30 MPa. La température dans les colonnes est en général comprise entre 0°C et 100°C. On a observé que le procédé selon l'invention donnait d'excellents résultats lorsque le nombre de colonnes ou tronçons de colonnes était inférieur à 8. Pour des valeurs supérieures à 8, il est très avantageux d'optimiser le procédé en étudiant l'influence du nombre et de la longueur des colonnes dans chaque zone combinée à l'instant du décalage au cours de la période du cycle.

Selon un autre mode de réalisation, il est possible que le nombre de colonnes ou tronçons de colonne soit temporairement nul dans une ou plusieurs zones du système. On peut alors travailler avec au moins deux colonnes ou tronçons de colonne et avantageusement avec trois.

L'invention concerne aussi le dispositif notamment pour la mise en oeuvre du procédé.

Plus précisément, il comprend une pluralité de colonnes chromatographiques ou tronçon de colonnes chromatographiques contenant un adsorbant, montés en série et en boucle, ladite boucle comportant une pluralité de lignes d'injection de fluide dans chaque colonne ou tronçon de colonne reliées à au moins une pompe d'injection et une pluralité de lignes de soutirage d'un fluide de chaque colonne ou tronçon de colonne reliées à au moins un moyen de soutirage, au moins une vanne sur chaque ligne, ladite boucle définissant au moins trois zones chromatographiques, chacune d'elle étant déterminée par un point d'injection de fluide et un point de soutirage d'un fluide, le dispositif étant caractérisé en ce qu'il comporte des moyens de commande de variation dans le temps de la longueur des zones raccordées à ladite vanne et adaptés à décaler d'une colonne ou tronçon de colonne les positions des points d'injection et de soutirage de manière intermittente.

Lorsque la boucle est fermée, elle peut comprendre au moins une pompe de recirculation d'un fluide ou au moins un compresseur d'un solvant supercritique, d'un fluide subcritique ou d'un gaz comprimé. Lorsque la boucle est ouverte, la pompe d'injection d'éluant est connectée à la sortie de la zone IV et à l'entrée de la zone 1 suivante de façon à délivrer avec un apport d'éluant le débit requis à l'entrée de ladite zone L

Les vannes mises en oeuvre sont avantageusement des vannes tout ou rien.

Le moyen de soutirage au niveau des lignes d'extrait et de raffinat peut être une pompe. Il peut être aussi une vanne analogique asservie à un débitmètre ou à un moyen de mesure de la pression dans le dispositif, la pression dans le système permettant en effet d'avoir la force motrice pour l'écoulement.

Le procédé selon l'invention (VARICOL) est mieux expliqué dans les exemples ci-dessous, mais ses différences par rapport au procédé du Lit Mobile Simulé apparaissent immédiatement :

1. les longueurs de zone ne sont pas constantes au cours du temps
2. le nombre des colonnes par zone n'est pas constant pendant le temps
3. les lignes entrée/sortie ne sont pas toutes déplacées simultanément

Bien que l'oscillation introduise une perturbation dans le système, il apparaît de façon surprenante que les performances du procédé VARICOL sont souvent meilleures que celles du système Lit Mobile Simulé (voir exemples).

Pendant une période, le nombre de colonnes dans chaque zone a été varié, et à des fins pédagogiques, il peut être utile de définir un nombre moyen de colonnes par zone :

$<Nb1>$ = nombre moyen de colonnes contenu dans la zone 1 pendant une période
$<Nb2>$ = nombre moyen de colonnes contenu dans la zone 2 pendant une période
$<Nb3>$ = nombre moyen de colonnes contenu dans la zone 3 pendant une période
$<Nb4>$ = nombre moyen de colonnes contenu dans la zone 4 pendant une période.

De même qu'un système de Lit Mobile Simulé peut être présenté par :

LMS     $Nb1/Nb2/Nb3/Nb4$ nous pouvons représenter un procédé périodique VARICOL par :
VARICOL     $\langle Nb1 \rangle / \langle Nb2 \rangle / \langle Nb3 \rangle / \langle Nb4 \rangle$

Cependant, alors que le nombre de colonnes par zone a une réelle signification pour les systèmes LMS, les nombres moyens qui peuvent être non entiers et qui n'ont pas de signification technique sont simplement utilisés par commodité pour le procédé VARICOL.

Pour un nombre total de colonne donné, il existe une infinité de configurations possibles avec le procédé VARICOL en fonction du déphasage des commutations réalisées.

Selon un mode particulier de configuration, il est proposé le cas où le nombre moyen de colonne dans une zone peut être inférieur à 1. Ce cas est obtenu si le nombre de colonnes dans la zone est temporairement nul au cours de la période, du fait du décalage asynchrone des points d'injection et de soutirage.

Considérons par exemple un système composé de 4 colonnes chromatographiques.
La seule configuration possible en lit mobile simulé est la configuration ayant une colonne dans chacune des 4 zones du système.

Avec le procédé VARICOL 4 colonnes, le nombre de configurations possibles est infini. Il est en effet possible de répartir les 4 colonnes entre les zones grâce au décalage asynchrone des lignes entrée-sortie.

On peut obtenir une répartition du type <0,5><1,5><1,5><0,5> en suivant par exemple les temps de commutation décrit dans le tableau 4.

Tableau 4

| | entrée/sortie | Nb de colonnes dans chaque zone |
|---|---|---|
| *Au temps 0* | *EI(1)/Ext(2)/Feed(3)/Raff(1)* | *1/1/2/0* |
| *Au temps ΔT/2* | *EI(2)/Ext(2)/Feed(4)/Raff(1)* | *0/2/1/1* |
| *Au temps ΔT* | *EI(2)/Ext(3)/Feed(4)/Raff(2)* | *1/1/2/0* |
| *Au temps ΔT+ΔT/2* | *EI(3)/Ext(3)/Feed(1)/Raff(2)* | *0/2/1/1* |
| *Au temps 2 ΔT* | *EI(3)/Ext(4)/Feed(1)/Raff(3)* | *1/1/2/0* |

On peut également obtenir une configuration du type<0,5><1,5><0,5><1,5> en suivant par exemple les temps de commutation décrit dans le tableau 5.

Tableau 5

| | entrée/sortie | Nb de colonnes dans chaque zone |
|---|---|---|
| *Au temps 0* | *El(1)/Ext(1)/Feed(3)/Raff(3)* | *0/2/0/2* |
| *Au temps ΔT/2* | *El(1)/Ext(2)/Feed(3)/Raff(4)* | *1/1/1/1* |
| *Au temps ΔT* | *El(2)/Ext(2)/Feed(4)/Raff(4)* | *0/2/0/2* |
| *Au temps ΔT+ΔT/2* | *El(2)/Ext(3)/Feed(4)/Raff(1)* | *1/1/1/1* |
| *Au temps 2 ΔT* | *El(3)/Ext(3)/Feed(1)/Raff(1)* | *0/2/0/2* |

Dans ce cas, on peut noter que la charge est temporairement injectée au point de collecte du raffinat. Les lignes de charge et de raffinat se retrouvent donc connectées simultanément entre deux colonnes données du système, il y a donc un risque de polluer directement le raffinat prélevé par la charge qui est injectée.
Dans le cas du tableau 4, le point d'injection de l'éluant est temporairement situé au point de prélèvement du raffinat et de l'extrait. Il y a donc un risque de passage de l'éluant injecté vers les points de soutirage.
Ceci peut cependant être résoiu par un ajustement judicieux des points d'injection et de soutirage entre les colonnes du système. A l'entrée de chacune des colonnes, les points de soutirage d'extrait et de raffinat précédent les points d'injection de charge et d'éluant. ce qui évite ainsi la pollution des soutirages par les lignes d'injection dans le cas où ces lignes servait temporairement positionnées au même point du circuit de recyclage.

## EXEMPLES

Tous les exemples relatifs à un lit mobile simulé avec décalage simultané des points d'injection et de soutirage sont donnés à titre comparatif (LMS).

### *Exemple 1:*

Ce procédé VARICOL a été utilisé dans le but de réaliser la séparation de stéroisomères du phytol (3,7,1,15-tetraméthyl-2-hexadécen-1-ol, $C_{20}H_{40}O$). Le phytol synthétique est un mélange de cis et trans isomères, ce dernier étant utilisé en parfumerie.
La séparation entre les isomères du phytol est réalisée sur silice (Lichroprep Si 60, 25-40 micromètres de Merck KGaA, Darmstadt) avec un éluant composé d'heptane acétate d'éthyle (75/25 v/v) à 27°C. Dans un but de simplification, une solution contenant 50 % de cis et 50 % de trans isomère est préparée. D'après des mesures réulisées à l'échelle du laboratoire, les isothermes d'adsorption ont été déterminées et ajustées convenablement sur un modèle d'équation du type Langmuir modifié:

$$n_i = \lambda_\tau c_i + \frac{\bar{K}_i c_i}{1 + \sum_j \tilde{K}_j c_j}$$

n étant la concentration de l'espace i adsorbée sur le solide
$\lambda_1$, $\lambda_2$, $K_1$, $K_2$, $K_1$, $K_2$ sont des paramètres ajustables
$C_i$ et $C_j$ étant les concentrations des espèces i et j dans la phase mobile.

  Avec :

$\lambda_1 = 1.7$ $\lambda_2 = 1.7$
$K_1 = 0{,}20633$ $\tilde{K}_2 = 0.9862$
  $\tilde{K}_1 = 0{,}00645$ $\tilde{K}_2 = 0.0308$

La connaissance des isothermes d'adsorption n'est pas absolument nécessaire pour opérer le procédé VARICOL mais aide à trouver les paramètres opératoires adaptés pour obtenir les puretés adéquates. Les techniques utilisées font appel aux méthodes de simulation numérique décrites par exemple dans "Fundamentals of preparative and non linear chromatography. G. Guiochon, S. Golsbran Shirazi and A.M. Katti, Academie Press, 1994".
Les décalages du point d'injection ou de soutirage de fluide sont réalisés au temps t qui est une fraction de

la période $\Delta$T.

## 1. Systèmes VARICOL à 5 colonnes :

L'expérience a démontré que pour une concentration de charge de 6,4 g/l, un jeu adéquat de débits sur un système comportant 5 colonnes de 2,6 cm de diamètre et 16 cm de longueur correspond à :

$Q_{Eluent}$ = 24,98 ml/min  $Q_{charge}$ = 22,08 ml/min
$Q_{Extrait}$ = 25,42 ml/min  $Q_{zone\ 1}$ = 106,84 ml/min

Pour ce jeu de débits, la période de déplacement optimale des positions des entrées/sorties est : $\Delta$T = 1,6 min pour le système Lit Mobile Simulé (LMS).
Les concentrations et puretés de l'extrait et du raffinat obtenues par les différents procédés sont données dans le tableau 4. Une pureté globale est définie par la valeur moyenne des puretés de l'extrait et du raffinat.

| Configuration | | Extrait | | | Raffinat | | | pureté |
|---|---|---|---|---|---|---|---|---|
| | | cis (g/L) | trans (g/L) | pureté % | cis (g/L) | trans (g/L) | pureté % | globale |
| VARICOL | 1,25 1,25 1,25 1,25 | 0,170 | 2,690 | 94,1 | 3,060 | 0,120 | 96,2 | 95,2 |
| | à t=0     2111 | | | | | | | |
| | à t=$\Delta$T/4    1112 | | | | | | | |
| | à t=$\Delta$T/2    1121 | | | | | | | |
| | à t=3$\Delta$T/4    1211 | | | | | | | |
| LMS | 1112 | 0,180 | 2,560 | 93,4 | 3,050 | 0,260 | 92,1 | 92,8 |
| LMS | 1121 | 0,280 | 2,670 | 90,5 | 2,940 | 0,120 | 96,1 | 93,3 |
| LMS | 1211 | 0,180 | 2,500 | 93,3 | 3,050 | 0,260 | 92,1 | 92,7 |
| LMS | 2111 | 0,280 | 2,640 | 90,4 | 2,940 | 0,170 | 94,5 | 92,5 |
| VARICOL | 1,2 1,2 1,4 1,2 | 0,185 | 2,694 | 93,6 | 3,050 | 0,108 | 96,6 | 95,1 |
| | à t=0     1112 | | | | | | | |
| | à t=$\Delta$T/5    1121 | | | | | | | |
| | à t=3$\Delta$T/5    1211 | | | | | | | |
| | à t=4$\Delta$T/5    2111 | | | | | | | |

Table 6

Toutes les configurations possibles de Lit Mobile Simulé (pour un système 5 colonnes) figurent dans le tableau 6. La meilleure pureté moyenne (93.3 %) est obtenue par la configuration *1/1/2/1*.
Le procédé VARICOL 4 zones de 1,25 colonne en moyenne permet d'obtenir une pureté moyenne de 95,2 %, laquelle est donc d'environ 2 % supérieure au meilleur résultat obtenue avec le procédé LMS. Soulignons que cette aptitude du procédé VARICOL à obtenir des puretés supérieures avec des colonnes et débits similaires à ceux du LMS est extrêmement intéressante.
La seconde mise en oeuvre du procédé VARICOL permet d'illustrer un fonctionnement pour lequel le déphasage de temps de ligne à ligne n'est pas identique et qui montre aussi de bons résultats.

## 2. Systèmes à 8 colonnes

Afin de garder la longueur de la colonne et la quantité de phase stationnaire constantes dans le système, la longueur des colonnes a été réduite à 10 cm chacune. Les mêmes débits que ceux dans le système à 5 colonnes ont été utilisés en ajustant le temps de période à $\Delta$T = 1 min.

Les concentrations et puretés obtenues dans le flux de l'extrait et du raffinat pour les différents procédés sont présentés dans le tableau 7. Une pureté globale est définie comme la valeur moyenne des puretés de l'extrait et du raffinat.

| | Configuration | Extrait | | | Raffinat | | | pureté globale |
|---|---|---|---|---|---|---|---|---|
| | | cis (g/L) | trans (g/L) | pureté % | cis (g/L) | trans (g/L) | pureté % | |
| VARICOL 1 | 1.5 2.5 1.5 2.5<br>à t=0    1 3 1 3<br>à t=ΔT/2  2 2 2 2 | 0,080 | 2,680 | 97,1 | 3,170 | 0,130 | 96,1 | 96,6 |
| VARICOL 2 | 2.5 2.5 1.5 1.5<br>à t=0    2 3 1 2<br>à t=ΔT/2  3 2 2 1 | 0,130 | 2,720 | 95,4 | 3,110 | 0,090 | 97,2 | 96,3 |
| VARICOL 3 | 1.5 1.5 2.5 2.5<br>à t=0    1 2 2 3<br>à t=ΔT/2  2 1 3 2 | 0,180 | 2,770 | 93,9 | 3,060 | 0,030 | 99,0 | 96,5 |
| LMS | 2 2 2 2 | 0,110 | 2,720 | 96,100 | 3,140 | 0,070 | 97,8 | 97,0 |

**Table 7**

Dans ce cas, les puretés du LMS sont déjà élevées (environ 97 %), et il n'a pas été possible d'améliorer ces résultats avec le procédé VARICOL. Le moyen d'obtenir des puretés supérieures serait d'augmenter les longueurs de colonne et/ou d'augmenter le nombre de colonnes dans le cadre du procédé selon l'invention et/ou de changer les débits utilisés.

### *Exemple 2:*

La séparation entre fructose et glucose a été effectuée sur Dowex 99 monosphere (350 micromètres) sous forme de calcium utilisant de l'eau (65 °C) comme éluant. Dans ces conditions, les isothermes d'adsorption sont presque linéaires et les facteurs de rétention des deux sucres sont donnés par :
$\bar{K}_{Gluc.} = 0.25$      $\bar{K}_{Fruct} = 0.45$.

### 1. Systèmes à 5 colonnes :

L'expérience a montré que pour une concentration de charge de 50 g/l de chaque espèce, un jeu adéquat de débits pour un système constitué de colonnes de 2,6 cm de diamètre et de 160 cm de longueur est :

$Q_{Eluent}$ = 18,13 ml/min      $Q_{charge}$ = 13,76 ml/min
$Q_{Extrait}$ = 16,57 ml/min      $Q_{zone\ 1}$ = 90,36 ml/min

Pour ce jeu de débits, la période de déplacement optimale des position des entrées/sorties est : $\Delta T$ = 6,4 min pour le système Lit Mobile Simulé (LMS).

Table 8

| | Configuration | | | | Extrait | | | Raffinat | | | pureté globale |
|---|---|---|---|---|---|---|---|---|---|---|---|
| | | | | | Glucose (g/l) | Fructose (g/l) | pureté % | Glucose (g/l) | Fructose (g/l) | pureté % | |
| VARICOL | 1,25 | 1,25 | 1,25 | 1,25 | 2,710 | 39,380 | 93,6 | 41,890 | 2,450 | 94,5 | 94,1 |
| | à t=0 | | 1112 | | | | | | | | |
| | à t=ΔT/4 | | 1121 | | | | | | | | |
| | à t=ΔT/2 | | 1211 | | | | | | | | |
| | à t=3ΔT/4 | | 2111 | | | | | | | | |
| LMS | 1112 | | | | 2,860 | 37,010 | 92,8 | 41,820 | 4,870 | 89,6 | 92,2 |
| LMS | 1121 | | | | 4,500 | 39,190 | 89,7 | 40,040 | 2,500 | 94,1 | 91,9 |
| LMS | 1211 | | | | 2,540 | 37,010 | 89,7 | 42,130 | 4,870 | 89,6 | 89,7 |
| LMS | 2111 | | | | 4,500 | 38,660 | 89,7 | 40,040 | 3,090 | 92,8 | 91,3 |

L'amélioration obtenue grâce au procédé VARICOL 4 zones de 1,25 colonne en moyenne (tableau 8) est ici aussi très significative. La pureté globale est presque de 3 % supérieure à celle obtenue dans le cas d'un LMS classique.

### 2. Systèmes à 6, 7 et 8 colonnes

D'autres expériences ont été effectuées et sont présentées dans les tableaux 9, 10 et 11.

La longueur totale de colonne ainsi que les débits ont été maintenus constants dans les deux types d'essais d'un même système. Pour chaque cas, le temps de période et la longueur des colonnes ont été ajustés.

Système à 6 colonnes : L = 1,33m, $\Delta T$ = 5,32 min

| Type | Configuration | Extrait | | | Raffinat | | | pureté globale % |
|---|---|---|---|---|---|---|---|---|
| | | Glucose (g/l) | Fructose (g/l) | pureté % | Glucose (g/l) | Fructose (g/l) | pureté % | |
| VARICOL | 1,5 1,5 1,5 1,5 à t=0      1 2 1 2 à t=$\Delta T$/2   2 1 2 1 | 2,11 | 39,94 | 95,0 | 42,50 | 1,88 | 95,8 | 95,4 |
| LMS | 1 1 2 2 | 3,29 | 38,73 | 92,2 | 41,35 | 3,00 | 93,2 | 92,7 |
| LMS | 1 2 1 2 | 1,02 | 36,37 | 97,3 | 43,79 | 5,56 | 88,7 | 93,0 |
| LMS | 2 1 1 2 | 3,29 | 38,19 | 92,1 | 41,35 | 3,59 | 92,0 | 92,0 |
| LMS | 1 2 2 1 | 2,97 | 38,73 | 92,9 | 41,67 | 3,00 | 93,3 | 93,1 |
| LMS | 2 1 2 1 | 5,05 | 40,78 | 89,0 | 39,44 | 0,78 | 98,1 | 93,5 |
| LMS | 2 2 1 1 | 2,97 | 38,19 | 92,8 | 41,67 | 3,59 | 92,1 | 92,4 |

**Table 9**

Système à 7 colonnes : L = 1,14 m, $\Delta T$ = 4,56 min

| Type | Configuration | Extrait | | | Raffinat | | | pureté globale % |
|---|---|---|---|---|---|---|---|---|
| | | Glucose (g/L) | Fructose (g/L) | pureté % | Glucose (g/L) | Fructose (g/L) | pureté % | |
| VARICOL | 1,75 1,75 1,75 1,75 à t=0      1 2 2 2 à t=$\Delta T$/4   2 1 2 2 à t=$\Delta T$/2   2 2 1 2 à t=3$\Delta T$/4  2 2 2 1 | 1,81 | 40,24 | 95,7 | 42,83 | 1,54 | 96,5 | 96,1 |
| LMS | 1 2 2 2 | 1,3 | 38,30 | 96,7 | 43,49 | 3,47 | 92,6 | 94,7 |
| LMS | 2 1 2 2 | 3,68 | 40,52 | 91,7 | 40,93 | 1,07 | 97,5 | 94,6 |
| LMS | 2 2 1 2 | 1,3 | 37,76 | 96,7 | 43,49 | 4,07 | 91,4 | 94,1 |
| LMS | 2 2 2 1 | 3,36 | 40,52 | 92,3 | 41,25 | 1,07 | 97,5 | 94,9 |

**Table 10**

## Système à 8 colonnes: L = 1 m, ΔT = 4 min

| Type | Configuration | Extrait | | | Raffinat | | | pureté globale % |
|------|---------------|---------|---------|-----------|---------|---------|-----------|------|
| | | Glucose (g/L) | Fructose (g/L) | pureté % | Glucose (g/L) | Fructose (g/L) | pureté % | |
| LMS | 2 2 2 2 | 1,62 | 40,20 | 96,1 | 43,15 | 1,41 | 96,8 | 96,5 |
| VARICOL | 1,75 1,75 2,25 2,25<br>à t=0　　　2 1 3 2<br>à t=$^{\Delta}$T/4　2 2 2 2<br>à t=3 ΔT/4　1 2 2 3 | 1,79 | 40,27 | 95,7 | 42,93 | 1,44 | 96,8 | 96,2 |
| VARICOL | 1,75 2,25 1,75 2,25<br>à t=0　　　2 2 2 2<br>à t=3 ΔT/4　1 3 1 3 | 1,26 | 39,73 | 96,9 | 43,49 | 1,99 | 95,6 | 96,3 |
| VARICOL | 1,75 2,25 2,25 1,75<br>à t=0　　　1 3 2 2<br>à t=$^{\Delta}$T/4　2 2 2 2<br>à t=3 ΔT/4　2 2 3 1 | 1,67 | ·40,33 | 96,0 | 42,69 | 1,42 | 96,8 | 96,4 |
| VARICOL | 2,25 1,75 2,25 1,75<br>à t=0　　　2 2 2 2<br>à t=3 ΔT/4　3 1 3 1 | 2,17 | 40,72 | 94,9 | 42,46 | 1,00 | 97,7 | 96,3 |
| VARICOL | 2,25 1,75 1,75 2,25<br>à t=0　　　2 2 1 3<br>à t=$^{\Delta}$T/4　2 2 2 2<br>à t=3 ΔT/4　3 1 2 2 | 1,74 | 40,09 | 95,8 | 42,94 | 1,55 | 96,5 | 96,2 |
| VARICOL | 2,25 2,25 1,75 1,75<br>à t=0　　　3 2 2 1<br>à t=$^{\Delta}$T/4　2 2 2 2<br>à t=3 ΔT/4　2 3 1 2 | 1,7 | 40,24 | 95,9 | 42,91 | 1,52 | 96,6 | 96,3 |

## Table 11

L'analyse des résultats présentés dans les tableaux 8, 9, 10 et 11 conduit aux conclusions suivantes :

- un système VARICOL 5 colonnes est plus efficace que tous les LMS 5 colonnes possibles.
- un système VARICOL 6 colonnes est plus efficace que tous les LMS 6 colonnes possibles.
- un système VARICOL 7 colonnes est plus efficace que tous les LMS 7 colonnes possibles.
- un système VARICOL 5 colonnes permet d'atteindre des puretés équivalentes à ce qui est obtenu avec un LMS à 6 colonnes. Le procédé VARICOL permet donc une réduction significative des coûts.
- le procédé VARICOL est plus avantageux pour un système dont le nombre de colonnes est inférieur à 8.

Le fait de pouvoir avoir un nombre de colonne temporairement nul dans les zones peut permettre d'utiliser des configurations VARICOL à quatre zones en utilisant un nombre de colonne total inférieur au nombre de zones. Une configuration VARICOL à 3 colonnes est illustrée dans cet exemple.

### Exemple 3:

Le procédé VARICOL a été utilisé dans le but de réaliser la séparation du mélange racémique de 1.2.3.4-tetrahydro-lnaphthol. La séparation est réalisée sur une phase stationnaire chirale (Chiralpak AD 20μm, Daicel, Japon) avec un éluant composé d'héptane-isopropanol-acide trifluoroacetique (95/5/0.2 v/v/v) à 27°C.

### Système VARICOL 3 colonnes:

Le lit mobile simulé à quatre zones ne peut pas être réalisé avec 3 colonnes. Cependant, le procédé VARICOL quatre zones est réalisable en utilisant un nombre de colonne temporairement nul dans certaines zones du système. Les débits opératoires ont été optimisés pour une concentration de charge de 20g/l sur un système VARICOL composé de 3 colonnes de 1cm de diamètre et de 20cm de longueur.

Une configuration VARICOL du type <0,5><1><1><0,5> est utilisé pour étudier la potentialité de ce type de procédé. Un exemple de commutation des vannes permettant d'obtenir cette configuration est présenté dans le tableau 12.

Tableau 12

|  | entrée/sortie | Nb de colonnes dans chaque zone |
|---|---|---|
| *Au temps 0* | *El(1)/Ext(2)/Feed(3)/Raff(1)* | *1/1/1/0* |
| *Au temps ΔT/2* | *El(2)/Ext(2)/Feed(3)/Raff(1)* | *0/1/1I1* |
| *Au temps ΔT* | *El(2)/Ext(3)/Feed(1)/Raff(2)* | *1/1/1/0* |
| *Au temps ΔT+ΔT/2* | *El(3)/Ext(3)/Feed(1)/Raff(2)* | *0/1/1/1* |
| *Au temps 2 ΔT* | *El(3)/Ext(1)/Feed(2)/Raff(3)* | *1/1/1/0* |

Les débits opératoires sont optimisés (maximisation de la productivité du système) afin d'obtenir une pureté extrait et raffinat de 95%.

Avec une période ΔT de 1,66min, les débits opératoires suivants permettent d'atteindre les puretés requises:

$Q_{Eluent}$ = 9,21 ml/min $Q_{charges}$ =1,54 ml/min
$Q_{Extrait}$ = 7,32 ml/min $Q_{zone\ 1}$ = 29,04 ml/min

On montre ainsi qu'un système VARICOL à quatre zones permet de purifier un mélange avec 3 colonnes en utilisant un nombre de colonne temporairement nul en zone 1 et 4.

**Système VARICOL 4 colonnes:**

On compare les performances d'un lit mobile simulé (SMB) quatre colonnes (1/1/1/1) avec différentes configurations de VARICOL quatre colonnes.

Pour ces deux procédés, quatre colonnes chromatographiques de lem de diamètre et 10cm de longueur sont utilisées.

Un exemple de commutation des vannes permettant d'obtenir un VARICOL <0,5><1,5><1,5><0,5> est présenté dans le tableau 13.

Tableau 13

|  | entrée/sortie | Nb de colonnes dans chaque zone |
|---|---|---|
| *Au temps 0* | *Ei(1)/Ext(1)/Feed(3)/Raff(4)* | *0/2/1/1* |
| *Au temps ΔT/2* | *El(1)/Ext(2)/Feed(3)/Raff(1)* | *1/1/2/0* |
| *Au temps ΔT* | *El(2)/Ext(2)/Feed(4)/Raff(1)* | *0/2/1/1* |
| *Au temps ΔT+ΔT/2* | *El(2)/Ext(3)/Feed(4)/Raff(2)* | *1/1/2/0* |
| *Au temps 2 ΔT* | *El(3)/Ext(3)/Feed(1)Raff(2))* | *0/2/1/1* |

Le tableau 14 compare les débits opératoires du système SMB et VARICOL optimisés pour atteindre une pureté de 95 % à l'extrait et au raffinat. Pour les deux systèmes, la période est égale à 0,83min.

Tableau 14

|  | $Q_{zone\ 1}$ (ml/min) | $Q_{Eluent}$ (ml/min) | $Q_{Extrait}$ (ml/min) | $Q_{Charge}$ (ml/min) |
|---|---|---|---|---|
| SMB 1/1/1/1 | 27,10 | 5,79 | 4,76 | 1.13 |
| VARICOL <0.5><1,5><1,5><0,5> | 29,96 | 10,74 | 8,73 | 1,84 |

Dans ce tableau, on peut comparer la productivité des différentes configurations étudiées en comparant le débit du mélange injecté $Q_{Charge}$ dans le système.

On peut noter que les différentes configurations VARICOL expérimentées permettent d'augmenter significativement la productivité du système (+63%) par rapport à un procédé SMB à 4 colonnes.

**Revendications**

1. Procédé de séparation d'au moins un composant d'un mélange le contenant, dans un dispositif présentant un ensemble Nc de colonnes chromatographiques ou tronçons de colonnes chromatographiques contenant un adsorbant, montés en série et en boucle, la boucle comportant au moins un point d'une injection de charge, un point d'un soutirage de raffinat, un point d'une injection d'un éluant et un point d'un soutirage d'extrait, dans lequel on détermine entre un point d'injection et un point de soutirage ou vice-versa une zone chromatographique, le procédé étant **caractérisé en ce que** au bout d'une période $\Delta T$ de temps donné, l'ensemble des points d'injection et de soutirage se trouvent décalés d'un même nombre de colonnes ou tronçons de colonne, avantageusement d'une colonne ou tronçon de colonne, dans une direction donnée définie par rapport à celle de l'écoulement d'un fluide principal circulant à travers la boucle et **en ce que**, au cours de ladite période pendant toute la durée d'un cycle ($Nc\,\Delta T$), on effectue le décalage des différents points d'injection et de soutirage à des temps différents de manière que la longueur des zones définies par lesdits différents points soit variable, ladite période $\Delta T$ étant définie comme le plus petit intervalle de temps au bout duquel chacune des entrées et sorties a été decalée du même nombre de colonnes ou tronçons de colonne.

2. Procédé selon la revendication 1, dans lequel on réalise au moins une fois la succession d'étapes suivantes :

   - on décale à l'instant t1 au cours de ladite période, dans une direction donnée, la position du point d'injection ou de soutirage relatif à au moins une zone, d'une colonne ou tronçon de colonne, puis on décale à un instant t2 au cours de ladite période, dans la même direction la position du point d'injection ou de soutirage relatif à au moins une autre zone, d'une colonne ou tronçon de colonne, et on répète l'opération si nécessaire de manière à ce que, après ladite période de temps, on retrouve la même configuration de colonnes ou tronçons de colonne que la configuration initiale avec un décalage de toutes les positions des points d'injection et des points de soutirage d'un même nombre de colonnes ou tronçons de colonne.

3. Procédé selon l'une des revendications 1 et 2, dans lequel on réalise au moins une fois la succession d'étapes suivantes :

   - on décale à l'instant t1 au cours de ladite période, dans une direction donnée, la position du point d'injection ou de soutirage relatif à au moins une zone, d'une colonne ou tronçon de colonne de façon à augmenter la longueur de ladite zone et à diminuer la longueur de la zone adjacente à ladite zone, puis on décale à un instant t2 au cours de ladite période, dans la même direction la position du point d'injection ou de soutirage relatif à au moins une autre zone, d'une colonne ou tronçon de colonne de façon à augmenter la longueur de ladite autre zone et à diminuer la longueur de la zone adjacente à ladite autre zone, et on répète l'opération si nécessaire de manière à ce que, après ladite période de temps, on retrouve la même configuration de colonnes ou tronçons de colonne que la configuration initiale avec un décalage de toutes les positions des points d'injection et des points de soutirage d'un même nombre de colonnes ou tronçons de colonne.

4. Procédé selon l'une des revendications 1 et 2, dans lequel on décale à l'instant t1 d'une colonne ou tronçon de colonne la position du point de soutirage de l'extrait et la position du point de soutirage du raffinat puis on décale à l'instant t2 d'une colonne ou tronçon de colonne au cours de ladite période la position du point d'injection de la charge et la position du point d'injection de l'éluant.

5. Procédé selon l'une des revendications 1 à 4, dans lequel au cours de la période, on effectue tous les décalages des positions d'injection ou de soutirage avec un déphasage de temps sensiblement constant et avantageusement avec un déphasage au mains égal à un quart de période.

6. Procédé selon l'une des revendications 1 à 4, dans lequel on effectue, au cours de la période, les décalages des positions des points d'injection ou de soutirage avec un déphasage de temps non constant.

7. Procédé selon l'une des revendications 1 à 6 dans lequel le débit de fluide circulant dans une zone donnée est maintenu sensiblement constant.

8. Procédé selon l'une des revendications 1 à 7 dans lequel on effectue lesdits décalages dans la même direction que celle de l'écoulement dans la boucle.

9. Procédé selon l'une des revendications 1 à 8, dans lequel au moins un débit de fluide circulant dans une ligne d'injection ou de soutirage est contrôlé par la pression dans le dispositif, et de préférence le débit de fluide soutiré en tant que raffinat et/ou extrait.

10. Procédé selon l'une des revendications 1 à 9, dans lequel l'éluant est un liquide, un fluide supercritique ou subcritique ou un gaz comprimé.

11. Procédé selon l'une des revendications 1 à 10, dans lequel le nombre de colonnes est inférieur à 8.

12. Procédé selon l'une des revendications 1 à 11, dans lequel la boucle comporte quatre zones chromatographiques.

13. Procédé selon l'une des revendications 1 à 12. dans lequel le nombre de colonnes est temporairement nul dans une ou plusieurs zones chromatographiques.

14. Procédé selon l'une des revendications 1 à 13, **caractérisé en ce qu'**il est mis en oeuvre dans un dispositif comprenant une pluralité de colonnes chromatographiques ou tronçons de colonnes chromatographiques contenant un adsorbant, montés en série et en boucle, ladite boucle comportant une pluralité de lignes d'injection de fluide dans chaque colonne reliées à au moins une pompe d'infection et une pluralité de lignes de soutirage d'un fluide de chaque colonne reliées à au moins un moyen de soutirage, au moins une vanne sur chaque ligne, ladite boucle définissant au moins trois zones chromatographiques, chacune d'elle étant déterminée par un point d'ïnjectton de fluide et un point de soutirage d'un fluide, le dispositif comportant en outre des moyens de commande de variation dans le temps de la longueur des zones raccordées à ladite vanne et adaptés à décaler d'au moins une colonne ou tronçon de colonne les positions des points d'injection et de soutirage de manière intermittente.

15. Procédé selon la revendication 14, dans lequel la boucle est fermée et dans lequel ladite boucle comporte au moins une pompe de recirculation d'un fluide ou au moins un compresseur d'un liquide subcritique, d'un fluide supercritique ou d'un gaz comprimé.

16. Procédé selon la revendication 14, dans lequel la boucle est ouvert et dans lequel la pompe d'injection d'éluant est connectée à la sortie de la zone IV et à l'entrée de la zone 1 suivante de façon à délivrer avec un apport d'éluant le débit requis à l'entrée de ladite zone I.

17. Procédé selon l'une des revendications 14 à 16, dans lequel le moyen de soutirage est une pompe ou une vanne analogique asservie à un débitmètre ou à un moyen de mesure de la pression dans le dispositif.

18. Utilisation du procédé selon l'une des revendications 1 à 17 pour la séparation de stéréoisomères.

## Patentansprüche

1. Verfahren zur Trennung wenigstens einer Komponente aus einem sie enthaltenden Gemisch in einer Vorrichtung, die über eine Anordnung Nc chromatographischer Kolonnen oder Abschnitte chromatographischer Kolonnen, die ein Adsorptionsmittel enthalten, verfügt, und die in Reihe und in einer Schleife angeordnet sind, wobei die Schleife wenigstens einen Injektionspunkt für die Charge, einen Abzugspunkt für das Raffinat, einen Punkt zum Einführen oder Einspritzen eines Eluierungsmittels sowie einen Punkt zum Abziehen des Extrakts umfasst, bei dem man zwischen einem Injektionspunkt und einem Abzugspunkt oder umgekehrt eine chromatographische Zone bestimmt, und das Verfahren **dadurch gekennzeichnet ist, dass** am Ende einer gegebenen zeitlichen Periode $\Delta T$ die Gesamtheit der Injektions- und Abzugspunkte sich um eine gleiche Anzahl von Kolonnen oder Kolonnenabschnitten versetzt befindet, vorzugsweise um eine Kolonne oder ein Kolonnenabschnitt in einer gegebenen Richtung, die bezüglich der der Strömung eines Hauptfluids definiert ist, das quer durch die Schleife zirkuliert, und dass während dieser Periode während der Gesamtdauer eines Zyklus ($Nc \, \Delta T$) man die Verschiebung der verschiedenen Injektions- und Abzugspunkte zu unterschiedlichen Zeitpunkten derart vornimmt, dass die Länge der durch diese unterschiedlichen Punkte definierten Zonen variabel wird, wobei diese Periode $\Delta T$ als das kleinste Zeitintervall definiert ist, an dessen Ende jeder der Eintritte und Austritte um die gleiche Anzahl von Kolonnen oder Kolonnenabschnitten versetzt ist.

2. Verfahren nach Anspruch 1, bei dem man wenigstens einmal die Aufeinanderfolge folgender Schritte realisiert:

   a. man versetzt oder verschiebt im Augenblick t1 während dieser Periode in einer gegebenen Richtung den Ort des Injektions- oder Abzugspunkts bezüglich wenigstens einer Zone um eine Kolonne oder einen Kolonnenabschnitt, dann verschiebt man in einem Augenblick t2 während dieser Periode in der gleichen Richtung den Ort des Injektions- oder Abzugspunkts bezogen auf wenigstens eine andere Zone um eine Kolonne oder einen Kolonnenabschnitt und wiederholt gegebenenfalls den Vorgang derart, dass nach dieser zeitlichen Periode man die gleiche Konfiguration von Kolonnen oder Kolonnenabschnitten wie die Anfangskonfiguration mit einer Verschiebung sämtlicher Orte der Injektions- und Abzugspunkte um eine gleiche Zahl von Kolonnen oder Kolonnenabschnitten wiederfindet.

3. Verfahren nach einem der Ansprüche 1 und 2, bei dem man wenigstens einmal die Aufeinanderfolge der nachstehenden Stufen realisiert:

a. man verschiebt im Augenblick t1 während dieser Periode in einer gegebenen Richtung den Ort des Injektions- oder Abzugspunkts bezüglich wenigstens einer Zone um eine Kolonne oder einen Kolonnenabschnitt, derart, dass die Länge der Zone erhöht wird und die Länge der zu dieser Zone benachbarten Zone vermindert wird, und verschiebt dann in einem Augenblick t2 während dieser Periode in der gleichen Richtung den Ort des Injektions- oder Abzugspunkts bezogen auf wenigstens eine andere Zone um eine Kolonne oder einen Kolonnenabschnitt derart, dass die Länge dieser anderen Zone erhöht und die Länge der dieser anderen Zone benachbarten Zone vermindert wird, und man wiederholt falls notwendig den Vorgang derart, dass nach dieser zeitlichen Periode man die gleiche Konfiguration von Kolonnen oder Kolonnenabschnitten wie die Anfangskonfiguration mit einer Verschiebung sämtlicher Orte der Injektions- und Abzugspunkte um eine Anzahl von Kolonnen oder Kolonnenabschnitten wiederfindet.

4. Verfahren nach einem der Ansprüche 1 und 2, bei dem man im Augenblick t1 um eine Kolonne oder einen Kolonnenabschnitt die Position des Extraktabzugspunkts und die Position des Raffinatabzugspunkts verschiebt und dann im Augenblick t2 um eine Kolonne oder einen Kolonnenabschnitt während dieser Periode die Position des Injektionspunktes der Charge und den Ort des Injektionspunktes des Eluierungsmittels versetzt bzw. verschiebt.

5. Verfahren nach einem der Ansprüche 1 bis 4, bei dem man während der Periode die sämtlichen Verschiebungen der Injektions- oder Abzugsorte mit einer zeitlichen im Wesentlichen konstanten Phasenverschiebung und vorzugsweise mit einer Phasenverschiebung vornimmt, die wenigstens gleich einer Viertelperiode ist.

6. Verfahren nach einem der Ansprüche 1 bis 4, bei dem man während der Periode die Verschiebungen der Orte der Injektions- oder Abzugspunkte mit einer nicht konstanten Phasenverschiebung vornimmt.

7. Verfahren nach einem der Ansprüche 1 bis 6, bei dem der in einer gegebenen Zone zirkulierende Fluiddurchsatz im Wesentlichen konstant gehalten wird.

8. Verfahren nach einem der Ansprüche 1 bis 7, bei dem man diese Verschiebungen in der gleichen Richtung wie der der Strömung in der Schleife vornimmt.

9. Verfahren nach einem der Ansprüche 1 bis 8, bei dem wenigstens ein in einer Injektions- oder Abzugsleitung zirkulierender Fluiddurchsatz durch den Druck in der Vorrichtung geregelt wird und bevorzugt der Durchsatz an abgezogenem Fluid in Form von Raffinat und/oder Extrakt.

10. Verfahren nach einem der Ansprüche 1 bis 9, bei dem das Eluierungsmittel eine Flüssigkeit, ein superkritisches Fluid oder unterkritisches bzw. subkritisches Fluid oder ein komprimiertes Gas ist.

11. Verfahren nach einem der Ansprüche 1 bis 10, bei dem die Anzahl der Kolonnen kleiner 8 ist.

12. Verfahren nach einem der Ansprüche 1 bis 11, bei dem die Schleife vier chromatographische Zonen umfasst.

13. Verfahren nach einem der Ansprüche 1 bis 12, bei dem die Anzahl der Kolonnen zeitweise null in einer oder mehreren chromatographischen Zonen ist.

14. Verfahren nach einem der Ansprüche 1 bis 13, **dadurch gekennzeichnet, dass** es in einer Vorrichtung realisiert wird, die über eine Vielzahl chromatographischer Kolonnen oder chromatographischer Kolonnenabschnitte, die ein Adsorptionsmittel enthalten, verfügt und die in Reihe und in Schleife angeordnet sind, wobei die Schleife eine Vielzahl von Injektionsleitungen für Fluid in jeder Kolonne umfasst, die mit wenigstens einer Injektionspumpe und einer Vielzahl von Abzugsleitungen für ein Fluid jeder Kolonne verbunden und mit wenigstens einem Abzugsmittel verbunden sind, wenigstens ein Ventil oder einen Schieber an jeder Leitung, wobei die Schleife wenigstens drei chromatographische Zonen definiert, von denen eine jede durch einen Injektionspunkt für Fluid und einen Abzugspunkt eines Fluids bestimmt ist, und die Vorrichtung im Übrigen Steuermittel für die Veränderung der Länge der mit diesem Ventil verbundenen Zonen umfasst und die so ausgelegt sind, dass sie um wenigstens eine Kolonne oder ein Kolonnenabschnitt die Orte der Injektions- und Abzugspunkte intermittierend verschieben.

15. Verfahren nach Anspruch 14, bei dem die Schleife geschlossen ist und bei dem diese Schleife wenigstens eine Rezirkulationspumpe für ein Fluid oder wenigstens einen Kompressor für ein unterkritisches Fluid, ein überkritisches Fluid oder ein komprimiertes Gas umfasst.

16. Verfahren nach Anspruch 14, bei dem die Schleife offen ist und bei dem die Pumpe für die Eluiermittelinjektion mit dem Ausgang der Zone IV und mit dem Eingang der folgenden Zone I verbunden ist, derart, dass mit einem Eluierungsmittelzusatz die geforderte Menge an den Eingang der Zone I geliefert wird.

17. Verfahren nach einem der Ansprüche 14 bis 16, bei dem das Abzugsmittel eine Pumpe oder ein Analogventil ist, das einem Durchflussmessgerät oder einem Messmittel für den Druck in der Vorrichtung zugeordnet oder von diesem hilfsgesteuert wird.

18. Anwendung des Verfahrens nach einem der Ansprüche 1 bis 17 auf die Trennung von Stereoisomeren.

**Claims**

1. A process for separating at least one component from a mixture containing it, in an apparatus having an assembly Nc of chromatographic columns or chromatographic column sections containing an adsorbant, mounted in series and in a loop, the loop comprising at least one point for injecting feed, a point for withdrawing raffinate, a point for injecting an eluent and a point for withdrawing an extract, in which a chromatographic zone is defined between an injection point and a withdrawal point or vice versa, the process being **characterized in that** at the end of a given time period $\Delta T$, the assembly of injection points and withdrawal points is shifted by the same number of columns or column sections, advantageously by one column or column section, in a given direction defined with respect to that of the flow of a principal fluid moving through the loop, and **in that** during the course of said period over the entire duration of a cycle (Nc$\Delta T$), the different injection and withdrawal points are shifted at different times such that the length of the zones defined by said different points is variable, said period $\Delta T$ being defined as the smallest time interval following which each of the inlets and outlets has been shifted by the same number of columns or column sections.

2. A process according to claim 1, in which the following succession of steps is carried out at least once:

   • at a time t1 during said period, the position of the injection point or withdrawal point relative to at least one zone is shifted in a given direction by one column or column section, then at a time t2 during said period, the position of the injection point or withdrawal point relative to at least one other zone is shifted in the same direction by one column or column section, and the operation is repeated if necessary such that, after said time period, the same configuration of columns or column sections as the initial configuration is regained with a shift of all of the injection point and withdrawal point positions by the same number of columns or column sections.

3. A process according to claim 1 or claim 2, in which the following succession of steps is carried out at least once:

   • at a time t1 during said period, the position of an injection point or withdrawal point relative to at least one zone is shifted in a given direction by one column or column section so as to increase the length of said zone and to reduce the length of the zone adjacent to said zone, then at a time t2 during said period, the position of the injection point or withdrawal point relative to at least one other zone is shifted in the same direction by one column or column section so as to increase the length of said other zone and reduce the length of the zone adjacent to said other zone, and the operation is repeated if necessary such that after said period of time, the same configuration of columns or column sections as the initial configuration is regained with a shift of all of the positions of the injection and withdrawal points by the same number of columns or column sections.

4.  A process according to claim 1 or claim 2, in which at time t1, the position of the extract withdrawal point and the position of the raffinate withdrawal point are shifted by one column or column section, then at a time t2 during said period, the position of the feed injection point and the position of the eluent injection point are shifted by one column or column section.

5.  A process according to one of claims 1 to 4, in which during the period, all of the shifts of the injection or withdrawal positions are carried out with a substantially constant time phase shift, advantageously with a phase shift of at least a quarter of a period.

6.  A process according to one of claims 1 to 4, in which during the period, the positions of the injection or withdrawal points are shifted with a non constant time phase shift.

7.  A process according to one of claims 1 to 6, in which the flow rate of the fluid moving in a given zone is maintained substantially constant.

8.  A process according to one of claims 1 to 7, in which said shifts are carried out in the same direction as that of the flow in the loop.

9.  A process according to one of claims 1 to 8, in which at least one flow of fluid moving in an injection or withdrawal line is controlled by the pressure in the apparatus, preferably the flow of the fluid extracted as the raffinate and/or extract.

10. A process according to one of claims 1 to 9, in which the eluent is a liquid, a supercritical or subcritical fluid, or a compressed gas.

11. A process according to one of claims 1 to 10, in which the number of columns is less than 8.

12. A process according to one of claims 1 to 11, in which the loop comprises four chromatographic zones.

13. A process according to one of claims 1 to 12, in which the number of columns is temporarily zero in one or more chromatographic zones.

14. A process according to one of claims 1 to 13, **characterized in that** it is carried out in an apparatus comprising a plurality of chromatographic columns or chromatographic column sections containing an adsorbant, mounted in series and in a loop, said loop comprising a plurality of lines for injecting fluid into each column connected to at least one injection pump and a plurality of lines for withdrawing a fluid from each column connected to at least one withdrawal means, at least one valve on each line, said loop defining at least three chromatographic zones, each one being defined by a fluid injection point and a fluid withdrawal point, the apparatus further comprising means for controlling the variation with time of the length of the zones connected to said valve and adapted to shift the positions of the injection and withdrawal points by at least one column or column section in an intermittent manner.

15. A process according to claim 14, in which the loop is closed and in which said loop comprises at least one pump for recirculating a fluid or at least one compressor for a subcritical liquid, a supercritical fluid or a compressed gas.

16. A process according to claim 14, in which the loop is open and in which the eluent injection point is connected to the outlet from zone IV and to the inlet to the next zone I to deliver, with a makeup of eluent, the required flow to the inlet to said zone I.

17. A process according to one of claims 14 to 16, in which the extraction means is a pump or an analogue valve controlled by a flow meter or a means for measuring the pressure in the apparatus.

18. Use of a process according to one of claims 1 to 17 for separating stereoisomers.